(19) Europäisches Patentamt
European Patent Office
Office européen des brevets

(11) **EP 3 047 060 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **14766949.3**

(22) Anmeldetag: **10.09.2014**

(51) Int Cl.:
**B29C 70/46** *(2006.01)*   **D04H 1/645** *(2012.01)*
**D04H 1/425** *(2012.01)*

(86) Internationale Anmeldenummer:
**PCT/EP2014/069293**

(87) Internationale Veröffentlichungsnummer:
**WO 2015/039940 (26.03.2015 Gazette 2015/12)**

(54) **VERFAHREN ZUR HERSTELLUNG EINES FORMKÖRPERS**

METHOD FOR PRODUCING A MOULDED BODY

PROCÉDÉ PERMETTANT DE PRODUIRE UN CORPS MOULÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013 EP 13185385**

(43) Veröffentlichungstag der Anmeldung:
**27.07.2016 Patentblatt 2016/30**

(73) Patentinhaber: **BASF SE**
**67056 Ludwigshafen am Rhein (DE)**

(72) Erfinder:
• **KALBE, Michael**
**69469 Weinheim (DE)**
• **BIRK, Thomas**
**68163 Mannheim (DE)**
• **BRÄUER, Judith Christine**
**68163 Mannheim (DE)**
• **SCHEIDHAUER, Rainer**
**67454 Haßloch (DE)**

(74) Vertreter: **BASF IP Association**
**BASF SE**
**G-FLP-C006**
**67056 Ludwigshafen (DE)**

(56) Entgegenhaltungen:
EP-A1- 0 960 864    WO-A1-2013/120752
DE-A1- 3 200 072    DE-A1- 19 754 447
DE-A1-102011 005 638    US-A1- 2012 252 936

**Beschreibung**

Gegenstand der vorliegenden Erfindung ist ein Verfahren zur Herstellung eines Formkörpers aus einem flächenförmigen Faservlies und einer wässrigen Polymerisatdispersion, welches dadurch gekennzeichnet ist, dass

a) eine wässrige Polymerisatdisperison, deren Polymerisatteilchen ein Polymerisat mit einer Glasübergangstemperatur $Tg \geq 35$ und $\leq 130$ °C aufweisen, in ein Faservlies eingebracht wird, danach

b) das so behandelte Faservlies getrocknet wird,

c) das getrocknete Faservlies auf eine Temperatur T° oberhalb der Glasübergangstemperatur des Polymerisats gebracht wird, und danach

d) das aufgeheizte Faservlies in einer Formpresse, deren Kontaktflächen eine Temperatur $T^u$ unterhalb der Glasübergangstemperatur des Polymerisats aufweisen, zum Formkörper verpresst und dabei auf eine Temperatur $< Tg$ abgekühlt wird und wobei das Faservlies in Verfahrensschritt c) zusätzlich auf eine Dicke $D_c$ vorverpresst wird, wobei die Dicke $D_c$ der nach Ende des Verfahrensschrittes d) erhaltenen Dicke $D_d + \leq 0,3\ D_d$ entspricht.

Formkörper aus Faservliesen und Verfahren zur ihrer Herstellung sind bekannt (siehe beispielsweise Industrial Applications of Natural Fibres: Structure, Properties and Technical Applications, insbesondere Kapitel 19.4, 2010 Johns Wiley & Sons, Ltd). So erfolgt die Formkörperherstellung in einer geläufigen Verfahrensvariante der Gestalt, dass Faservliese, welche in der Regel 50 Gew.-% an thermoplastischen Fasern, wie beispielsweise Polypropylen enthalten, in einer ersten Verfahrensstufe unter Schmelzen der thermoplastischen Fasern erhitzt und anschließend in einer zweiten Verfahrensstufe zum Formkörper verpresst und dabei abgekühlt werden.

In einer zweiten geläufigen Verfahrensvariante erfolgt die Formkörperherstellung der Gestalt, dass die Faservliese, insbesondere Faservliese aus Fasern natürlichen Ursprungs, mit einem Bindemittel, umfassend eine wässrigen Polymerisatdispersion und einen sogenannten Vernetzer getränkt (imprägniert) werden und die so erhaltenen getränkten Faservliese anschließend getrocknet und unter Ausbildung eines duroplastischen Bindemittels in die gewünschte Form gebracht werden. Wässrige Bindemittelsysteme, umfassend eine Polymerisatdispersion und einen Vernetzer sowie deren Verwendung zur Herstellung von Faservliesen sind dem Fachmann beispielsweise aus EP-A 735061, EP-A 1005508, EP-A 1240205, EP-A 1234004, EP-A 1268936, EP-A 1340774, EP-A 1846524, EP-A 2072578, EP-A 2328972, WO 2011/29810 oder WO 2012/117017 bekannt.

Nachteilig an den Verfahren des Standes der Technik ist, dass die Formkörper der ersten Verfahrensvariante zwar über ein Zweistufenverfahren (1. Aufheizen, 2. Verpressen) herstellbar sind, die erhaltenen Formkörper aber in ihrer Thermostabilität nicht immer voll zu befriedigen vermögen. Nach der zweiten Verfahrensvariante lassen sich jedoch keine Formkörper über ein Zweistufenverfahren herstellen, da hier die Bindemittelkomponenten bereits im Aufheizschritt zu einem nicht mehr verformbaren duroplastischen Kunststoff aushärten.

Aufgabe der vorliegenden Erfindung war es daher, ein Zweistufenverfahren zur Herstellung von Formkörpern zur Verfügung zu stellen, welches ausgehend von einer wässrigen Polymerisatdispersion den Zugang zu Formkörpern mit guter Thermostabilität ermöglicht.

Die Aufgabe wurde durch das eingangs definierte Verfahren gelöst.

Im Rahmen der vorliegenden Erfindung soll unter einem Faservlies eine flächenförmige Faserschicht verstanden werden, bei der Fasern begrenzter Länge, Endlosfasern oder Garne jeglicher Art und jeglichen Ursprungs zu einem Vlies zusammengefügt und auf irgendeine Weise miteinander verbunden worden sind, insbesondere durch mechanische Verfestigung oder chemische Vorbindung.

Zur Herstellung der erfindungsgemäß einsetzbaren Faservliese werden Naturfasern, wie pflanzliche, tierische und mineralische Fasern oder Chemiefasern, insbesondere aus natürlichen oder synthetischen Polymeren eingesetzt. Beispiele für pflanzliche Fasern sind Baumwollfasern, Flachsfasern, Hanffasern, Kenaffasern, Jutefasern, Holzfasern oder Sisalfasern, Beispiele für tierische Fasern sind Wolle oder andere Tierhaare, ein Beispiel für mineralische Fasern ist Steinwolle, ein Beispiel für Chemiefasern natürlichen Ursprungs sind Viskosefasern und Beispiele für Chemiefasern sind Polyesterfasern, wie Polytrimethylenterephthalat-, Polyethylennaphthalat-, Polyethylenterephthalat- oder Polybutylenterephthalatfasern sowie die unterschiedlichen Polycarbonatfasern, Polyolefinfasern, wie insbesondere Polyethylen- oder Polypropylenfasern, Polyamidfasern, wie Polycaprolactamfasern (Polyacrylamid 6), Polyamidfasern aus Hexamethylendiamin und Adipinsäure (Polyacrylamid 66), Polyamidfasern aus Hexamethylendiamin und Terephthalsäure (Polyacrylamid 6T), Polyamidfasern aus para-Phenylendiamin und Terephthalsäure (Aramid) sowie Mineralfasern, wie Glasfasern, Carbonfasern oder Basaltfasern.

Mit besonderem Vorteil werden erfindungsgemäß Faservliese eingesetzt, welche aus lignocellulosehaltigen Fasern, wie Baumwollfasern, Flachsfasern, Hanffasern, Kenaffasern, Jutefasern, Holzfasern und/oder Sisalfasern oder Mischungen davon mit thermoplastischen Kunststofffasern, wie Polyester- oder Polyolefinfasern, aufgebaut sind. Insbesondere vorteilhaft werden Faservliese eingesetzt, welche ausschließlich aus lignocellulosehaltigen Fasern, wie insbesondere Hanf, Kenaf, Flachs und/oder Holzfasern aufgebaut sind. Mit Vorteil sind die Faservliese aus Hanf und/oder Kenaf aufgebaut.

Die erfindungsgemäß einsetzbaren Faservliese weisen in der Regel ein Flächengewicht von ≥ 100 und ≤ 3000 g/m$^2$, vorteilhaft von ≥ 600 und ≤ 2000 g/m$^2$ und besonders vorteilhaft von ≥ 800 und ≤ 1400 g/m$^2$ auf.

Von Bedeutung ist ferner, dass die Faservliese erfindungsgemäß sowohl in Form von zugeschnittenen Einzelstücken wie auch in Form fortlaufender Faservliesbahnen eingesetzt werden können.

Erfindungsgemäß werden wässrige Polymerisatdispersionen eingesetzt, deren Polymerisatteilchen ein Polymerisat mit einer Glasübergangstemperatur Tg ≥ 35 und ≤ 130 °C aufweisen.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannten Polymerisatteilchen, in disperser Verteilung befindlich enthalten.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man die ethylenisch ungesättigten Monomeren, in der Regel unter Mitverwendung von Radikalkettenüberträgern und Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt.

Neben diesen sogenannten primären wässrigen Polymerisatdispersionen kennt der Fachmann auch noch sogenannte sekundäre wässrige Polymerisatdispersionen. Unter diesen werden solche wässrigen Polymerisatdispersionen verstanden, bei deren Herstellung das Polymerisat außerhalb des wässrigen Dispergiermediums erzeugt wird, beispielsweise in Lösung eines geeigneten nichtwässrigen Lösungsmittels befindlich. Diese Lösung wird anschließend in das wässrige Dispergiermedium überführt und unter Dispergierung das Lösungsmittel, in der Regel destillativ, abgetrennt.

Erfindungsgemäß werden solche wässrigen Polymerisatdispersionen eingesetzt, deren Polymerisatteilchen ein Polymerisat mit einer Glasübergangstemperatur Tg ≥ 35 und ≤ 130 °C, insbesondere ≥ 60 und ≤ 120 °C und vorteilhaft ≥ 70 und ≤ 110 °C aufweisen. Mit der Glasübergangstemperatur ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Im Rahmen der vorliegenden Schrift wird die Glasübergangstemperatur Tg nach dem DSC-Verfahren (Differential Scanning Calorimetry, 20 K/min, midpoint-Messung) gemäß ASTM D 3418-12 ermittelt.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + \ldots. \; xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Dem Fachmann ist es daher in Kenntnis der vorgenannten Zusammenhänge in einfachster Weise möglich, wässrige Polymerisatdispersionen herzustellen oder auszuwählen, deren Polymerisatteilchen ein entsprechendes Polymerisat mit einer Glasübergangstemperatur Tg im Bereich ≥ 35 und ≤ 130 °C aufweisen.

Erfindungsgemäß vorteilhaft lassen sich insbesondere solche wässrigen Polymerisatdispersionen einsetzen, deren Polymerisatteilchen

| | |
|---|---|
| 50 bis 99,9 Gew.-% | Ester der Acryl- und/oder Methacrylsäure mit 1 bis 12 C-Atome aufweisenden Alkanolen und/ oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinylester langkettiger Fettsäuren und/oder Ethylen |

in einpolymerisierter Form enthalten und welche eine Glasübergangstemperatur Tg im erfindungsgemäßen Bereich aufweisen.

Insbesondere vorteilhaft lassen sich erfindungsgemäß solche wässrigen Polymerisatdispersionen einsetzen, deren Polymerisatteilchen zu

| | |
|---|---|
| - 0,1 bis 5 Gew.-% | wenigstens eine 3 bis 6 C-Atome aufweisende $\alpha,\beta$-monoethylenisch ungesättigte Mono- und/ oder Dicarbonsäure und/oder deren Amid und |
| 50 bis 99,9 Gew.-% | wenigstens eines Esters der Acryl- und/oder Methacrylsäure mit 1 bis 12 C-Atome aufweisenden Alkanolen und/oder Styrol, oder |
| - 0,1 bis 5 Gew.-% | wenigstens eine 3 bis 6 C-Atome aufweisende $\alpha,\beta$-monoethylenisch ungesättigte Mono- und/ oder Dicarbonsäure und/oder deren Amid und |
| 50 bis 99,9 Gew.-% | Styrol und/oder Butadien, oder |
| - 0,1 bis 5 Gew.-% | wenigstens eine 3 bis 6 C-Atome aufweisende $\alpha,\beta$-monoethylenisch ungesättigte Mono- und/ oder Dicarbonsäure und/oder deren Amid und |
| 50 bis 99,9 Gew.-% | Vinylchlorid und/oder Vinylidenchlorid, oder |
| - 0,1 bis 5 Gew.-% | wenigstens eine 3 bis 6 C-Atome aufweisende $\alpha,\beta$-monoethylenisch ungesättigte Mono- und/ oder Dicarbonsäure und/oder deren Amid und |
| 40 bis 99,9 Gew.-% | Vinylacetat, Vinylpropionat, Vinylester der Versaticsäure, Vinylester langkettiger Fettsäuren und/oder Ethylen |

in einpolymerisierter Form enthalten und welche eine Glasübergangstemperatur Tg im erfindungsgemäßen Bereich aufweisen.

Der gewichtsmittlere Durchmesser der in den erfindungsgemäß einsetzbaren wässrigen Polymerisatdispersionen enthaltenen Polymerisatteilchen liegt in der Regel im Bereich $\geq 10$ und $\leq 1000$ nm, oft $\geq 50$ und $\leq 500$ nm oder $\geq 80$ und $\leq 300$ nm. Des Weiteren betragen die Feststoffgehalte der erfindungsgemäß einsetzbaren wässrigen Polymerisatdispersionen in der Regel $\geq 10$ und $\leq 70$ Gew.-%, vorteilhaft $\geq 30$ und $\leq 70$ Gew.-% und insbesondere vorteilhaft $\geq 40$ und $\leq 60$ Gew.-%.

Das Einbringen der wässrigen Polymerisatdispersion in das Faservlies ist dem Fachmann geläufig und erfolgt insbesondere durch gleichmäßige Besprühung mit oder Tauchung des Faservlieses in der wässrigen Polymerisatdispersion oder bevorzugt durch Einquetschen eines Polymerisatdispersionsschaums. Dabei wird die Menge an wässriger Polymerisatdispersion so gewählt, dass pro 100 g eingesetztem Faservlies (trocken; Feuchtegehalt < 10 Gew.-%) 1 bis 100 g, vorteilhaft 10 bis 50 g und insbesondere vorteilhaft 20 bis 30 g Polymerisat (fest) in das Faservlies eingebracht werden. Dabei erfolgt das Einbringen der wässrigen Polymerisatdispersion in das Faservlies vorteilhaft dergstalt, dass die wässrige Polymerisatdispersion im Faservlies homogen verteilt ist.

Nach dem Einbringen der wässrigen Polymerisatdispersion in das Faservlies gemäß Verfahrensschritt a) erfolgt in Verfahrensschritt b) die Trocknung des behandelten Faservlieses. Dabei erfolgt die Trocknung des behandelten Faservlieses nach üblichen, dem Fachmann geläufigen kontinuierlichen oder diskontinuierlichen Verfahren, wie beispielsweise durch Erwärmen bei Atmosphärendruck (1,013 bar absolut $\equiv$ 1 atm) oder im Unterdruck (< 1,013 bar absolut), mit oder ohne Über- bzw. Durchleiten eines trockenen Gasstromes in beispielsweise Trockenöfen, Bandtrockner, Schwebetrockner, Trommeltrockner oder Trockenkammern. In der Regel erfolgt die Trocknung im Temperaturbereich $\geq 50$ und $\leq 220$ °C, vorteilhaft im Temperaturbereich $\geq 90$ und $\leq 200$ °C und insbesondere vorteilhaft im Temperaturbereich $\geq 140$ und $\leq 180$ °C bei Atmosphärendruck. Dabei kann die Temperatur prinzipiell kleiner, gleich oder größer der Glasübergangstemperatur des Polymerisats der Polymerisatteilchen sein. Wesentlich ist jedoch, dass die Trocknung soweit geführt wird, dass der Restfeuchtegehalt des gemäß Verfahrensschritt b) erhaltenen Faservlieses $\leq 20$ Gew.-%, vorteilhaft $\leq 15$ Gew.-% und insbesondere vorteilhaft $\leq 10$ Gew.-% beträgt. Im Rahmen der vorliegenden Schrift soll der Restfeuchtegehalt bestimmt werden, indem in einem ersten Schritt der Feuchtegehalt des nicht behandelten Faservlieses bestimmt wird, indem eine Probe des unbehandelten Faservlieses in einem IR-Strahler (beispielsweise Typ Satorius MA 100) bei 120 °C bis zur Gewichtskonstanz getrocknet wird. Aus der Gewichtsdifferenz des unbehandelten Faservlieses vor und nach der Trocknung wird der Feuchtegehalt des unbehandelten Faservlieses errechnet. In einem zweiten Schritt wird nun das zu behandelnde Faservlies vor dem eigentlichen Einbringen der wässrigen Polymerisatdispersion gewogen und durch Subtraktion des Feuchtegehaltes das Trockengewicht des Faservlieses [$F_{ut}$] berechnet. Danach wird die wässrige Polymerisatdispersion, deren Gesamtfeststoffgehalt und deren Polymerisatfeststoffgehalt bekannt sind, in einer Menge in das Faservlies eingebracht, dass die gewünschte einzubringende Polymerisatmenge (und damit auch die gewünschte Feststoffmenge [$M_F$]) erhalten werden. Daran anschließend wird das behandelte Faservliese so lange und intensiv getrocknet, bis das Gewicht es getrockneten behandelten Faservlieses [$F_{bt}$] bei Raumtemperatur (ca. 20 bis 25 °C), abzüglich der Summe aus Trockengewicht des unbehandelten Faservlieses [$F_{ut}$] und der in das Faservlies eingebrachten Gesamtfeststoffmenge [$M_F$], dividiert durch die Summe aus Trockengewicht des unbehandelten Faservlieses [$F_{ut}$] und der in das Faservlies eingebrachten Gesamtfeststoffmenge [$M_F$], multipliziert mit 100 {entsprechend $(F_{bt}-F_{ut}-M_F)/(F_{ut}+M_F)\times100$} einen Wert ≤ 20 Gew.-%, vorteilhaft ≤ 15 Gew.-% und insbesondere vorteilhaft ≤ 10 Gew.-% erhalten wird.

Die nach dem Verfahrensschritt b) erhaltenen behandelten und getrockneten Faservliese können direkt weiterverarbeitet werden. Sie können aber auch auf eine Temperatur kleiner der Glasübergangstemperatur Tg des Polymerisats abgekühlt und in Form von Formkörpervorstufen, wie beispielsweise zugeschnittenen Einzelstücken (Formkörperrohlinge) oder aufgerollten fortlaufenden Faservliesbahnen aufbewahrt, zwischengelagert und/oder an Weiterverarbeiter geliefert und erst zu einem späteren Zeitpunkt den Verfahrensschritten c) und d) zugeführt werden.

Die nach dem Verfahrensschritt b) erhaltenen behandelten und getrockneten Faservliese können aber auch direkt weiterverarbeitet werden. Erfolgt dabei die Trocknung des behandelten Faservlieses bei einer Temperatur unterhalb der Glasübergangstemperatur Tg bzw. weist die Formkörpervorstufe eine Temperatur unterhalb der Glasübergangstemperatur Tg auf, so erfolgt in Verfahrensstufe c) ein Aufheizen des getrockneten Faservlieses auf eine Temperartur T° oberhalb der Glasübergangstemperatur Tg des Polymerisats. Für den Fall, dass die Trocknung des behandelten Faservlieses in Verfahrensstufe b) bei einer Temperatur oberhalb der Glasübergangstemperatur Tg des Polymerisats durchgeführt wird, so kann der Verfahrensschritt c) mit dem Verfahrensschritt b) dann zusammenfallen, wenn das Faservlies nach dem Trocknungsschritt b) eine Temperatur aufweist, welche der Weiterverarbeitungstemperatur T° entspricht. Weist dagegen das behandelte Faservlies nach dem Trocknungsschritt b) eine Temperatur oberhalb der Weiterverarbeitungstemperatur T° auf, so wird das behandelte und getrocknete Faservlies auf die Weiterverarbeitungstemperatur T° abgekühlt.

In Verfahrensschritt c) wird das getrocknete Faservlies auf eine Temperatur T° gebracht, wobei T° (in °C) in der Regel ein Wert Tg + ≥ 10 °C, insbesondere Tg + ≥ 20 °C und insbesondere Tg + ≥ 50 °C ist. Mit besonderem Vorteil weist die Temperatur T° einen Wert im Bereich Tg + (≥ 80 und ≤ 140) °C auf.

Erfindungsgemäß wird das Faservlies in Verfahrensschritt c) zusätzlich auf eine Dicke $D_c$ vorverpresst, wobei die Dicke $D_c$ der nach Ende des Verfahrensschrittes d) erhaltenen Formkörperdicke $D_d$ + ≤ 0,3 $D_d$, vorteilhaft $D_d$ + ≤ 0,2 $D_d$ und insbesondere vorteilhaft $D_d$ + ≤ 0,1 $D_d$ entspricht. Das bedeuted, dass die Dicke $D_c$ am Ende der Verfahrensstufe c) der Enddicke $D_d$ des Formkörpers nach Verfahrensschritt d) plus ≤ 30 %, vorteilhaft plus ≤ 20 % und insbesondere vorteilhaft plus ≤ 10 % der Enddicke $D_d$ entspricht. Verfahrenstechnisch wird über die Vorverpressung ein guter Wärmeeintrag (Aufheizung) ermöglicht.

Im Anschluss an Verfahrensschritt c) wird das aufgeheizte Faservlies in Verfahrensschritt d) in eine Formpresse überführt, deren Kontaktflächen eine Temperatur $T^u$ unterhalb der Glasübergangstemperatur Tg des Polymerisats aufweisen, dort zum Formkörper verpresst und dabei auf eine Temperatur unterhalb der Glasübergangstemperatur Tg abgekühlt.

Die Kontaktflächen der Formpresse weisen eine Temperarur $T^u$ (in °C) auf, welche in der Regel im Bereich Tg - (≥ 10) °C, vorteilhaft Tg - (≥ 20) °C und insbesondere vorteilhaft Tg - (≥ 50) °C liegt. Mit besonderem Vorteil liegt die Temperatur $T^u$ im Bereich ≥ 60 und ≤ 100 °C unterhalb der Glasübergangstemperatur Tg.

Die Dicke $D_d$ des Formkörpers am Ende der Verfahrensstufe d) beträgt (ohne Dekormaterial) in der Regel ≥ 0,5 und ≤ 10 mm, vorteilhaft ≥ 1 und ≤ 7 mm und insbesondere vorteilhaft ≥ 1,5 und ≤ 4 mm.

In einer vorteilhaften Ausführungsform erfolgt das erfindungsgemäße Verfahren der Gestalt, dass nach Verfahrensschritt c) und vor Verfahrensschritt d) noch ein Verfahrensschritt c1) durchgeführt wird, in welchem auf die eine und/oder die andere Oberfläche des aufgeheizten Faservlieses ein flächenförmiges Dekormaterial mit einer Dicke ≤ 10 mm aufgebracht wird.

Beim erfindungsgemäß einsetzbaren Dekormaterial handelt es sich vorteilhaft um ein textiles Flächengebilde, wie beispielsweise ein Vliesstoff, ein Gewebe oder ein Gewirke aus natürlichen oder synthetischen Fasern, eine Kunststofffolie, wie beispielsweise eine thermoplastische Polyvinylchlorid-, Polyolefin- oder Polyesterfolie, ein geschäumtes Flächengebilde, wie beispielsweise ein Flächengebilde aus einem Polyolefin- oder einem Polyurethanschaum, oder ein geschäumtes Flächengebilde, welches seinerseits auf der nicht mit dem erhitzen Faservlies in Kontakt kommenden Oberfläche mit einem textilen Flächengebilde, einer Kunststofffolie oder einem weiteren geschäumten Flächengebilde beschichtet (kaschiert) ist.

Das flächenförmige Dekormaterial weist in der Regel eine Dicke ≤ 10 mm auf. Handelt es sich bei dem flächenförmigen Dekormaterial um ein textiles Flächengebilde oder eine Kunststofffolie, so beträgt deren Dicke in der Regel ≤ 3 mm, häufig vorteilhaft ≤ 2 mm und häufig insbesondere vorteilhaft ≤ 1 mm. Handelt es sich jedoch bei dem flächenförmigen Dekormaterial um ein geschäumtes Flächengebilde oder ein beschichtetes (kaschiertes) geschäumtes Flächengebilde, so beträgt deren Dicke häufig ≤ 8 mm, oft ≤ 5 mm und besonders oft ≤ 3 mm.

Das erfindungsgemäße Verfahren kann in den Verfahrensschritten a) bis d) kontinuierlich oder diskontinuierlich erfolgen. In einer Ausführungsform erfolgen die Verfahrensschritte a) und b) zur Herstellung einer Formkörpervorstufe kontinuierlich. Danach kann das erfindungsgemäße Verfahren unterbrochen werden. Die sich daran anschließenden Verfahrensschritte c) und d), gegebenenfalls unter Einbeziehung eines Verfahrensschrittes c1) sind vorteilhaft miteinander gekoppelt und erfolgen daher kontinuierlich. In einer anderen Ausführungsform erfolgen die Verfahrensschritte a) bis d), gegebenenfalls unter Einbeziehung eines Verfahrensschrittes c1), kontinuierlich, d.h. die Abfolge der Verfahrensschritte a) bis d) erfolgt ohne Unterbrechung.

Im Anschluss an Verfahrensschritt d) wird der erhaltene Formkörper gegebenenfalls noch vollständig auf Raumtemperatur abgekühlt.

Die nach dem erfindungsgemäßen Verfahren erhältlichen Formkörper eigenen sich insbesondere vorteilhaft als Bauelement im Fahrzeugbau, wie beispielsweise als Türinsert, Türdekorträger, Kniefänger, Handschuhfach, Hutablage, Sonnenblende, Mittelkonsole, Kofferraumverkleidung oder Sitzrückenverkleidung, in Bauwerken, wie beispielsweise als Raumteiler, Trennwand oder Deckenplatte und Möbeln wie beispielsweise als Sitz- oder Rückenfläche.

Das erfindungsgemäße Verfahren soll durch nachfolgendes nichteinschränkendes Beispiel erläutert werden.

Beispiel

Es wurden genadelte Naturfaservliese, bestehend aus je 50 Gew-% Hanf- und Kenaffasern, mit einem Flächengewicht von 1050 g/m$^2$ und einer Größe von 34x28 cm verwendet.

Als wässrige Polymerisatdispersion wurde Acronal® S 940 der Firma BASF SE, eine wässrige Polymerisatdispersion auf Basis Styrol, n-Butylacrylat und Methylmethacrylat, mit einer Glasübergangstemperatur Tg von 79 °C und einem Feststoffgehalt von 50 Gew.-% eingesetzt.

Die wässrige Polymerisatdispersion wurde bei Raumtemperatur mit einem Kenwood Mixer, Typ Major, zu einem stabilen Schaum mit einer Dichte von 450 g pro Liter aufgeschäumt. Daran anschließend wurde der erhaltene Polymerdispersionsschaum über einen horizontal betriebenen Walzenstuhl der Firma Mathis, Typ HVF, in welchem die Naturfaserfliese senkrecht von oben zwischen die sich drehenden Walzen eingebracht wurden, derart in das Naturfaservlies eingearbeitet, dass die Bindemittelmenge 25 Gew.-%, bezogen auf das Trockengewicht der Faservliese (fest/fest) betrug. Daran anschließend wurden die erhaltenen Faservliese in einem Umlufttrockenschrank bei 90 °C bis auf einen Restfeuchtegehalt von 8 Gew.-% getrocknet.

Die nach der Trocknung erhaltenen Faservliese wurden dann in einer auf 180 °C vorgeheizten Presse der Firma Vogt, Typ LaboPress P400S, für 50 Sekunden aufgeheizt und dabei gleichzeitig auf eine Dicke von 2 mm vorverpresst. Die nun aufgeheizten und vorverpressten Formkörper wurden der Vorpresse entnommen und direkt in eine Formpresse der Firma Wickert, Typ WK P 600/3,5, überführt, deren Kontaktflächen Raumtemperatur (20 bis 25 °C) aufwiesen und innerhalb von 30 Sekunden direkt zu den endgültigen Formkörpern verpresst, welche an ihren ebenen Flächen eine Dicke von 1,7 mm aufwiesen.

Von erhaltenen ebenen Formkörpern (Platten) wurden nach einer 24-stündigen Lagerung bei 23 °C und 50 % relativer Luftfeuchtigkeit folgende Parameter bestimmt: Dichte 0,86 g/cm$^3$; Dicke: 1,7 mm; Schlagzähigkeit (gemäß Charpy ISO 179-1/FU, 05/2006): 16 kJ/m$^2$; E-Modul (gemäß DIN 14125-VA, W2, 06/1998): 5150 N/mm$^2$; Wasseraufnahme (gemäß DIN 52364, 04/1965): 45 Gew.-%; Quellung (gemäß DIN 52364, 04/1965): 26 %.

**Patentansprüche**

1.  Verfahren zur Herstellung eines Formkörpers aus einem flächenförmigen Faservlies und einer wässrigen Polymerisatdispersion, **dadurch gekennzeichnet, dass**

    a) eine wässrige Polymerisatdisperison, deren Polymerisatteilchen ein Polymerisat mit einer Glasübergangstemperatur Tg ≥ 35 und ≤ 130 °C aufweisen, in ein Faservlies eingebracht wird, danach
    b) das so behandelte Faservlies getrocknet wird,
    c) das getrocknete Faservlies auf eine Temperatur T° oberhalb der Glasübergangstemperatur des Polymerisats gebracht wird, und danach

d) das aufgeheizte Faservlies in einer Formpresse, deren Kontaktflächen eine Temperatur $T^u$ unterhalb der Glasübergangstemperatur des Polymerisats aufweisen, zum Formkörper verpresst und dabei auf eine Temperatur < Tg abgekühlt wird, und wobei das Faservlies in Verfahrensschritt c) zusätzlich auf eine Dicke $D_c$ vorverpresst wird, wobei die Dicke $D_c$ der nach Ende des Verfahrensschrittes d) erhaltenen Dicke $D_d + \leq 0,3\ D_d$ entspricht.

2. Verfahren nach Anspruch 1, **dadurch gekennzeichnet, dass** das eingesetzte Faservlies ein Flächengewicht von $\geq 100$ und $\leq 3000\ g/m^2$ aufweist.

3. Verfahren nach einem der Ansprüche 1 oder 2, **dadurch gekennzeichnet, dass** das eingesetzte Faservlies aus lignocellulosehaltigen Fasern besteht.

4. Verfahren nach einem der Ansprüche 1 bis 3, **dadurch gekennzeichnet, dass** die Menge an wässriger Polymerisatdispersion so bemessen wird, pro 100 g eingesetztem Faservlies 1 bis 100 g Polymerisat eingebracht werden.

5. Verfahren nach einem der Ansprüche 1 bis 4, **dadurch gekennzeichnet, dass** das Faservlies im Verfahrensschritt b) bis auf einen Restfeuchtegehalt $\leq 20$ Gew.-% getrocknet wird.

6. Verfahren nach einem der Ansprüche 1 bis 5, **dadurch gekennzeichnet, dass** $T° = Tg + \geq 10\ °C$ ist.

7. Verfahren nach einem der Ansprüche 1 bis 6, **dadurch gekennzeichnet, dass** $T^u = Tg - (\geq 10)\ °C$ ist.

8. Verfahren nach einem der Ansprüche 1 bis 7, **dadurch gekennzeichnet, dass** nach Verfahrensschritt c) und vor Verfahrensschritt d) noch ein Verfahrensschritt c1) durchgeführt wird, in welchem auf die eine und/oder die andere Oberfläche des aufgeheizten Faservlieses ein flächenförmiges Dekormaterial mit einer Dicke $\leq 10$ mm aufgebracht wird.

9. Verfahren nach Anspruch 8, **dadurch gekennzeichnet, dass** es sich bei dem Dekormaterial um ein textiles Flächengebilde, eine Kunststofffolie, ein geschäumtes Flächengebilde oder ein geschäumtes Flächengebilde, welches seinerseits auf der nicht mit dem erhitzen Faservlies in Kontakt kommenden Oberfläche mit einem textilen Flächengebilde, einer Kunststofffolie oder einem weiteren geschäumten Flächengebilde beschichtet ist, handelt.

10. Verfahren nach einem der Ansprüche 1 bis 9, **dadurch gekennzeichnet, dass** die Abfolge der Verfahrensstufen kontinuierlich erfolgt.

## Claims

1. A procedure for producing a shaped article from a sheetlike fibrous nonwoven web and an aqueous polymeric dispersion, which method comprises

   a) incorporating an aqueous polymeric dispersion whose polymer particles comprise a polymer having a glass transition temperature Tg $\geq 35$ and $\leq 130°C$ into a fibrous nonwoven web, then
   b) drying the fibrous nonwoven web thus treated,
   c) bringing the dried fibrous nonwoven web to a temperature T° above the glass transition temperature of the polymer, and then
   d) compressing the heated fibrous nonwoven web in a molding press whose contact faces have a temperature $T^u$ below the glass transition temperature of the polymer to form the shaped article and effect cooling to a temperature < Tg, and where the fibrous nonwoven web is additionally precompressed to a thickness $D_c$ in step c), where the thickness $D_c$ corresponds to the thickness $D_d + \leq 0.3\ D_d$ obtained on completion of step d).

2. The procedure according to claim 1 wherein the fibrous nonwoven web used has a basis weight of $\geq 100$ and $\leq 3000\ g/m^2$.

3. The procedure according to either of claims 1 and 2 wherein the fibrous nonwoven web used consists of lignocellulosic fibers.

4. The procedure according to any of claims 1 to 3 wherein the amount of aqueous polymeric dispersion is determined such that from 1 to 100 g of polymer are incorporated per 100 g of fibrous nonwoven web used.

5. The procedure according to any of claims 1 to 4 wherein the fibrous nonwoven web is dried in step b) to a residual moisture content ≤ 20 wt%.

6. The procedure according to any of claims 1 to 5 wherein T° is = Tg + ≥ 10°C.

7. The procedure according to any of claims 1 to 6 wherein $T^u$ is = Tg - (≥ 10)°C.

8. The procedure according to any of claims 1 to 7 further comprising a step c1) of applying a sheetlike decorative material ≤ 10 mm in thickness atop either and/or both of the surfaces of the heated fibrous nonwoven web after step c) and before step d) .

9. The procedure according to claim 8 wherein the decorative material comprises a textile sheet material, a polymeric foil, a foamed sheet material or a foamed sheet material in turn coated with a textile sheet material, a polymeric foil or a further foamed sheet material on the surface which does not come into contact with the heated fibrous nonwoven web.

10. The procedure according to any of claims 1 to 9 wherein the sequence of steps is continuous.

**Revendications**

1. Procédé de fabrication d'un corps moulé à partir d'un non-tissé fibreux plat et d'une dispersion aqueuse de polymère, **caractérisé en ce que**

   a) une dispersion aqueuse de polymère, dont les particules polymères comprennent un polymère ayant une température de transition vitreuse Tg ≥ 35 et ≤ 130 °C, est introduite dans un non-tissé fibreux, puis
   b) le non-tissé fibreux ainsi traité est séché,
   c) le non-tissé fibreux séché est porté à une température T° supérieure à la température de transition vitreuse du polymère, puis,
   d) le non-tissé fibreux chauffé est comprimé en le corps moulé dans une presse de moulage dont les surfaces de contact présentent une température $T^u$ inférieure à la température de transition vitreuse du polymère, et ainsi refroidi à une température < Tg, le non-tissé fibreux étant en outre pré-comprimé à une épaisseur $D_c$ à l'étape de procédé c), l'épaisseur $D_c$ correspondant à l'épaisseur $D_d$ obtenue après la fin de l'étape de procédé d) + ≤ 0,3 $D_d$.

2. Procédé selon la revendication 1, **caractérisé en ce que** le non-tissé fibreux utilisé présente un poids superficiel ≥ 100 et ≤ 3 000 g/m$^2$.

3. Procédé selon l'une quelconque des revendications 1 ou 2, **caractérisé en ce que** le non-tissé fibreux utilisé est constituée par des fibres lignocellulosiques.

4. Procédé selon l'une quelconque des revendications 1 à 3, **caractérisé en ce que** la quantité de dispersion aqueuse de polymère est déterminée de sorte que 1 à 100 g de polymère soit introduit pour 100 g de non-tissé fibreux utilisé.

5. Procédé selon l'une quelconque des revendications 1 à 4, **caractérisé en ce que** le non-tissé fibreux est séché à l'étape de procédé b) jusqu'à une teneur en humidité résiduelle ≤ 20 % en poids.

6. Procédé selon l'une quelconque des revendications 1 à 5, **caractérisé en ce que** T° = Tg + ≥ 10 °C.

7. Procédé selon l'une quelconque des revendications 1 à 6, **caractérisé en ce que** $T^u$ = Tg - (≥ 10) °C).

8. Procédé selon l'une quelconque des revendications 1 à 7, **caractérisé en ce qu'**une étape de procédé c1) est en outre réalisée après l'étape de procédé c) et avant l'étape de procédé d), lors de laquelle un matériau décoratif plat d'une épaisseur ≤ 10 mm est appliqué sur l'une et/ou l'autre surface du non-tissé fibreux chauffé.

9. Procédé selon la revendication 8, **caractérisé en ce que** le matériau décoratif est une structure textile plate, un film plastique, une structure plate moussée ou une structure plate moussée qui est elle-même revêtue sur la surface non en contact avec le non-tissé fibreux chauffé avec une structure textile plate, un film plastique ou une autre structure plate moussée.

10. Procédé selon l'une quelconque des revendications 1 à 9, **caractérisé en ce que** le déroulement des étapes de procédé a lieu en continu.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 735061 A
- EP 1005508 A
- EP 1240205 A
- EP 1234004 A
- EP 1268936 A
- EP 1340774 A
- EP 1846524 A
- EP 2072578 A
- EP 2328972 A
- WO 201129810 A
- WO 2012117017 A

- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A

**In der Beschreibung aufgeführte Nicht-Patentliteratur**

- Industrial Applications of Natural Fibres: Structure. Properties and Technical Applications. Johns Wiley & Sons, Ltd, 2010
- Encyclopedia of Polymer Science and Engineering. John Wiley & Sons, Inc, 1987, vol. 8, 659-677
- **D.C. BLACKLEY.** Emulsion Polymerisation. Applied Science Publishers, Ltd, 1975, 155-465
- **D.C. BLACKLEY.** Polymer Latices. vol. 1, 33-415
- **H. WARSON.** The Applications of Synthetic Resin Emulsions. Ernest Benn, Ltd, 1972, 49-244
- **J. PIIRMA.** Emulsion Polymerisation. Academic Press, 1982, 1-287

- **F. HÖLSCHER.** Dispersionen synthetischer Hochpolymerer. Springer-Verlag, 1969, 1-160
- **G. KANIG.** *Kolloid-Zeitschrift & Zeitschrift für Polymere,* vol. 190, 1
- **T.G. FOX.** Bull. Am. Phys. Soc. 1956, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **J. BRANDRUP ; E.H. IMMERGUT.** Polymer Handbook. J. Wiley, 1966
- POLYMER HANBOOK. J.Wiley, 1975
- POLYMER HANBOOK. J. Wiley, 1989